# EUROPÄISCHE PATENTANMELDUNG

(11) **EP 1 632 766 A1**
(43) Veröffentlichungstag der Anmeldung: **08.03.2006**
(21) Anmeldenummer: 04292136.1
(22) Anmeldetag: 03.09.2004
(51) Int. Cl.: G01M 11/00

(54) **Verfahren zum reflektometrischen Über-prüfen einer optischen Übertragungs-leitung, sowie optische Einrichtung und optische Sende- und Empfangseinrichtung**

(71) Anmelder: ALCATEL, 75008 Paris (FR)
(72) Erfinder: Schmuck, Harald, 71701 Schwieberdingen (DE); Krimmel, Heinz-Georg, 70825 Korntal-Münchingen (DE)
(74) Vertreter: Brose, Gerhard

(57) **Zusammenfassung**

Die Erfindung betrifft Verfahren zum reflektometrischen Überprüfen einer optischen Übertragungsleitung (gF) von einer optischen Sende- und Empfangseinrichtung (TRx) aus, bei welchem von Seiten der optischen Sende- und Empfangseinrichtung (TRx) ein Testsignal in die Übertragungsleitung (gF) eingespeist und das zur optischen Sende- und Empfangseinrichtung zurückreflektierte Signal (MS) ausgewertet wird, bei dem als Sender des Testsignals die für die Übertragung des Nutzsignals vorhandene Sendeeinrichtung (TX) mitverwendet wird, indem diese hierzu vom Übertragungs- in den Testbetrieb umgeschaltet wird, und daß als Empfänger des zurückreflektierten (MS) Signals die Sendeeinrichtung (Tx) selbst verwendet wird, sowie eine optische Einrichtung und eine optische Sende- und Empfangseinrichtung dafür.

## Beschreibung

Die Erfindung betrifft ein Verfahren zum reflektometrischen Überprüfen einer optischen Übertragungsleitung nach dem Oberbegriff des Anspruchs 1, eine optische Einrichtung nach dem Oberbegriff des Anspruchs 2 und eine optische Sende- und Empfangseinrichtung nach dem Oberbegriff des Anspruchs 3.

Derzeit werden immer mehr Glasfasern in sogenannten Metro-Netzen und in Zugangsnetzwerken eingesetzt. Dabei besteht ein zunehmender Bedarf an kontinuierlicher oder wenigstens regelmäßiger Überwachung dieser optischen Datenverbindungen. Die Überwachung ermöglicht vorbeugende Maßnahmen, wenn eine Datenverbindung allmählich schlechter wird und dies früh erkannt wird. Dadurch wird eine hohe Verfügbarkeit des Netzwerks sichergestellt. Dies ist beispielsweise für das Erbringen kritischer Dienste an Geschäftskunden wichtig. Auch im Fall von Ausfällen kann mittels einer Überwachungseinrichtung der Fehler schnell lokalisiert werden und die Fehlerursache bestimmt werden, um die Reparatur oder die Wiederherstellung zu veranlassen.

Der Netzbetreiber muß die Ursache einer Verbindungsstörung schnell erkennen können, um beispielsweise zwischen einer Störung im Glasfasernetz und einer Störung eines Netzknotens unterscheiden zu können und um im Fall eines Glasfaserproblems den Fehlerort und die Art des Fehlers oder eine längs der ganzen Verbindung auftretende Verschlechterung feststellen zu können.

Es ist bekannt, zur Überwachung der Qualität optischer Verbindungen, etwa zum Erkennen von Kabelbrüchen, zur Fehlererkennung, zum Erkennen von nachlassenden Signalpegeln oder des Nachlassens der Eigenschaften, sogenannte OTDR-Meßgeräte (OTDR = Optical Time Domain Reflectometry) zu verwenden. Messungen damit können bei Bedarf durchgeführt werden, etwa zum Dokumentieren eines Glasfasernetzes, oder parallel zum arbeitenden Netz mit einer besonderen Messwellenlänge im Wellenlängenmultiplex.

Die Kosten solcher Messgeräte sind hoch, weil sie sehr zuverlässig und gleichzeitig flexibel sein müssen, um allen Anforderungen beim Betrieb in den verschiedenartigsten Netzkonfigurationen zu genügen.

Hier schafft die Verbindung Abhilfe durch ein Verfahren nach der Lehre des Anspruchs 1, eine optische Einrichtung nach der Lehre des Anspruchs 2 und eine optische Sende- und Empfangseinrichtung nach der Lehre des Anspruchs 3.

Dadurch, daß für die Überwachungseinrichtung im Wesentlichen die für den normalen Betrieb ohnehin vorhandenen Einrichtungen mitverwendet werden, ergibt sich eine sehr preisgünstige Überwachung.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
Figur 1 zeigt ein erstes Ausführungsbeispiel einer erfindungsgemäßen optischen Sende- und Empfangseinrichtung mit einer erfindungsgemäßen optischen Einrichtung zur Durchführung des erfindungsgemäßen Verfahrens.
Figur 2 zeigt ein zweites Ausführungsbeispiel einer erfindungsgemäßen optischen Sende- und Empfangseinrichtung mit einer erfindungsgemäßen optischen Einrichtung zur Durchführung des erfindungsgemäßen Verfahrens. Die Darstellung eines dritten Ausführungsbeispiels unterscheidet sich nicht hiervon.

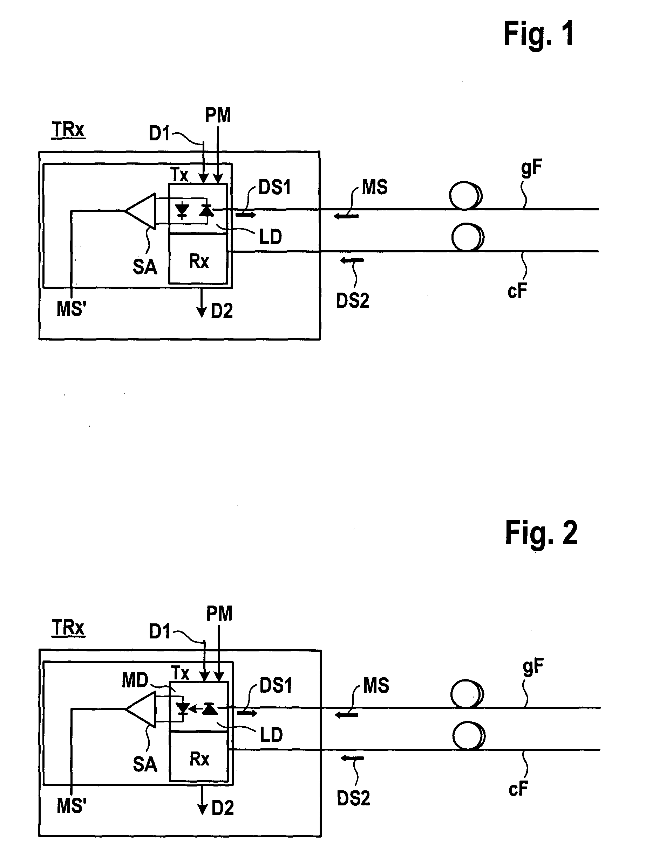

Anhand der Figur 1 wird zunächst ein erstes Ausführungsbeispiel einer erfindungsgemäßen optischen Sende- und Empfangseinrichtung mit einer erfindungsgemäßen optischen Einrichtung beschrieben.

Figur 1 zeigt eine optische Sende- und Empfangseinrichtung TRx mit einer davon ausgehenden optischen Glasfaser gF (going fiber) und einer dort ankommenden optischen Glasfaser cF (coming fiber). Kern der optischen Sende- und Empfangseinrichtung TRx ist ein optischer Sender Tx und ein optischer Empfänger Rx. Weiter ist ein Signalverstärker SA (Signal Amplifier) eingezeichnet.

Der optische Sender Tx ist etwas detaillierter dargestellt, soweit dies zum Verständnis der vorliegenden Erfindung erforderlich ist. Eine Laserdiode LD wird von einer Datenfolge D1 angesteuert und sendet ein optisches Datensignal DS1 auf die davon ausgehende optische Glasfaser gF. Der Laserdiode ist eine Monitordiode zugeordnet, die in diesem ersten Ausführungsbeispiel keine erfindungsgemäße Rolle spielt und deshalb auch nicht bezeichnet ist. Sie dient der Überwachung der Laserdiode während des regulären Betriebs.

Ein über die ankommende optische Glasfaser cF ankommendes optisches Datensignal DS2 wird im Empfänger Rx in eine Datenfolge D2 zurückverwandelt. Die einzelnen Maßnahmen, die dabei erforderlich sind, sind von der vorliegenden Erfindung unberührt und werden hier nicht näher beschrieben.

Zur Messung der Eigenschaften der optischen Glasfaser gF wird die Datenfolge D1 unterbrochen oder eine geeignete Pause abgewartet und ein Pulsmeßsignal PM an den optischen Sender Tx angelegt und von der Laserdiode LD gesendet. Dessen in der optischen Glasfaser gF an verschiedenen Stellen reflektierte Anteile kommen als Überwachungssignal MS (Monitoring Signal) zurück.

In diesem Ausführungsbeispiel wird die Tatsache ausgenützt, daß die heute üblicherweise eingesetzten elektro-optischen Wandler, so die hier genannte Laserdiode, auch einen inversen Betrieb zulassen, bei dem auftreffendes Licht eine Veränderung der elektrischen Eigenschaften bewirkt, die an den Anschlüssen ablesbar ist. Sofern diese Veränderung nicht proportional zur Intensität des auftreffenden Licht ist, muß dies in der nachfolgenden Auswerteschaltung mit berücksichtigt werden. Ansonsten kann die Auswertung auf bekannte Weise erfolgen, wozu diese Veränderung abgegriffen und mittels des Signalverstärkers SA in ein dem Überwachungssignal MS proportionales Meßsignal MS' gewandelt wird. Die Ankopplung des Signalverstärkers SA an das lichtemitierende Element, hier die Laserdiode LD, ist hier sehr symbolisch zu verstehen; da in der Regel der Strom durch ein solches Element und nicht die Spannung an diesem dem auftreffenden Photonenstrom proportional ist, wird wohl eher an einem in Reihe zum lichtemittierenden Element liegenden ohmschen Widerstand abgegriffen.

Auf jeden Fall kann hier durch sehr wenige zusätzliche Elemente mit einem ansonsten nicht erfindungsgemäß aufgebauten optischen Sender zusätzlich das für eine reflektometrische Überwachung erforderliche Meßsignal erzielt werden.

Die Auswertung des erzielten Meßsignals wird von der vorliegenden Erfindung nicht betroffen und hier nicht weiter beschrieben.

Ein zweites Ausführungsbeispiel wird anhand der Figur 2 beschrieben.

Figur 2 unterscheidet sich von Figur 1 nur geringfügig. Hier ist die Monitordiode MD explizit bezeichnet; das Meßsignal MS' wird in diesem Fall an der Monitordiode abgegriffen. Das hierzu zum Signalabgriff beim ersten Ausführungsbeispiel gesagte gilt auch hier. In diesem Fall kann wohl auch auf einen separaten Signalverstärker verzichtet werden, da die Monitordiode ohnehin mit einem solchen ausgerüstet sein muß.

Das zweite Ausführungsbeispiel hat gegenüber dem ersten Ausführungsbeispiel den Vorteil, daß die Monitordiode ein Bauelement ist, das schon für die Umsetzung vom optischen in den elektrischen Bereich optimiert ist und nicht in einer Betriebsweise betrieben wird, für das es nicht vorgesehen ist. Andererseits sind aber die Lichtstärken der Laserdiode selbst und die des reflektierten Meßsignals MS deutlich unterschiedlich, so daß hierauf nicht optimiert wurde. Hinzu kommt, daß die Monitordiode nicht direkt im Lichtweg des ankommenden Meßsignals liegt, welches deshalb erst nach Durchgang durch die Laserdiode oder nach Reflexion an dieser ermittelt werden kann.

Der zuletzt genannte Nachteil wird in einem dritten Ausführungsbeispiel dadurch in einen Vorteil umgekehrt, daß die Laserdiode so beschaltet wird, daß sie für das ankommende Meßsignal als optischer Verstärker wirkt, womit das auf die Monitordiode fallende Licht vorher verstärkt wird.

Das erste und das dritte Ausführungsbeispiel beruhen darauf, daß die verwendete Laserdiode durch die Art der Beschaltung auch auf andere Weise als nur als Sendediode verwendet werden kann. Dies ist an sich bekannt; auch die entsprechenden Beschaltungsvarianten sind an sich bekannt.

## Patentansprüche

1. Verfahren zum reflektometrischen Überprüfen einer optischen Übertragungsleitung (gF), bei welchem von Seiten einer optischen Sendeeinrichtung (TRx) ein Testsignal in die Übertragungsleitung (gF) eingespeist und das zurückreflektierte Signal (MS) ausgewertet wird, **dadurch gekennzeichnet, daß** als Sender des Testsignals die für die Übertragung des Nutzsignals vorhandene Sendeeinrichtung (Tx) mitverwendet wird, indem diese hierzu vom Übertragungs- in den Testbetrieb umgeschaltet wird, und daß als Empfänger des zurückreflektierten Signals (MS) die Sendeeinrichtung (Tx) selbst verwendet wird.

2. Optische Einrichtung (TRx) zum reflektometrischen Überprüfen einer optischen Übertragungsleitung (gF), mit Sendemitteln, um von Seiten der optischen Einrichtung (TRx) ein Testsignal in die Übertragungsleitung (gF) einzuspeisen und mit Empfangsmitteln, um das zur optischen Sende- und Empfangseinrichtung zurückreflektierte Signal auszuwerten, **dadurch gekennzeichnet, daß** Sendemittel (Tx) die für die Übertragung des Nutzsignals vorhandene Sendeeinrichtung (LD, MD) ist und daß Empfangsmittel die Sendeeinrichtung (LD, MD) selbst ist.

3. Optische Sende- und Empfangseinrichtung **dadurch gekennzeichnet, daß** sie eine optische Einrichtung nach Anspruch 2 enthält.

4. Verfahren nach Anspruch 1, **dadurch gekennzeichnet, daß** als Sender eine Laserdiode (LD) verwendet wird, die in invertierter Betriebsart als Empfänger verwendet wird.

5. Verfahren nach Anspruch 1, **dadurch gekennzeichnet, daß** als Sender eine Laserdiode (LD) mit Monitordiode (MD) verwendet wird und daß die Monitordiode (MD) auch als Empfänger verwendet wird.

6. Verfahren nach Anspruch 6, **dadurch gekennzeichnet, daß** die Laserdiode als optischer Verstärker verwendet wird.
